# EUROPEAN PATENT APPLICATION

(11) **EP 1 879 000 A1**
(43) Date of publication of application: **16.01.2008**
(21) Application number: 06014254.4
(22) Date of filing: 10.07.2006
(51) Int. Cl.: G01C 21/26, G10L 15/00, H04L 12/58

(54) **Transmission of text messages by navigation systems**

(71) Applicant: Harman Becker Automotive Systems GmbH, 76307 Karlsbad (DE)
(72) Inventor: Herforth, Mirko, 20251 Hamburg (DE)
(74) Representative: Grünecker, Kinkeldey, Stockmair & Schwanhäusser Anwaltssozietät

(57) **Abstract**

The present invention relates to vehicle navigation system, comprising an input means configured to receive and to digitize a speech signal, a speech recognition means configured to receive and to recognize the digitized speech signal, a text message generating means configured to generate a text message based on the recognition of the digitized speech signal and a transmitting means configured to transmit the text message to a remote receiving means.

## Description

### Field of Invention

The present invention relates to vehicle navigation systems and, in particular, to vehicle navigation systems including means as, e.g., telephone modules or speech input devices, for receiving speech signals from users of the navigation systems.

### Background of the Invention

In recent years an increasing need for providing means for communication of passengers of a vehicle with remote parties as, e.g., passengers of another vehicle can be observed. Customers demand for a reliable and easy everywhere and every time communication with an arbitrary communication party even in surroundings that previously were regarded as not favorable for communication with people that are relatively far away.

Nowadays, the usage of cell phones is widely spread. However, it cannot be guaranteed that the signal quality, in particular, in noisy surroundings is satisfying and the intelligibility of speech signals received by cell phones may be deteriorated to a degree that even a complete interruption of the communication may occur.

On the other hand, navigation systems in vehicles become increasingly prevalent. Usually on board navigation computer systems analyze the combined data provided by GPS (Global Positioning System), motion sensors as ABS wheel sensors as well as a digital map and thereby determine the current position and velocity of a vehicle with increasing preciseness. The vehicle navigation systems may also be equipped to receive and process broadcasted information as, e.g., the traffic information provided by radio stations.

Some navigation systems comprise transmitter means for transmitting vehicle information, e.g., including information on the actual position of the vehicle or the operation state of the vehicle. Moreover, vehicles may be equipped with radio transmitters for transmitting signals or messages in emergency cases.

However, these transmitter systems are very restricted in their communication capacity in that only emergency signals or acoustic and speech signals detected by microphones installed inside or outside the vehicle are continuously transmitted to one predetermined receiver, e.g., an emergency service, after activation of the transmission operation.

Besides acoustic communication by verbal utterances text messages sent by means of the Short Message Service (SMS) employed by cell phones are very popular. However, in particular, the driver of a vehicle is not able to send an SMS message by typing the text message by means of the relatively tiny keyboard of a standard cell phone. Even if the driver can use a larger keyboard when, e.g., the cell phone is inserted in an appropriate hands-free set or when the vehicle communication system is provided with a touch screen or a similar device, manually editing a text that is intended to be sent to a remote communication party would distract the driver's attention from steering the vehicle. Therefore, writing an E-Mail or an SMS would result in some threat to the driving safety, in particular, in heavy traffic.

There is, therefore, a need to provide passengers in vehicles, in particular, in automobiles, with an improved alternative kind of communication, in particular, communication by text messages, with a remote party during a travel.

### Description of the Invention

In view of the above, the present invention provides a new possibility for the communication of a passenger of vehicle, in particular, a driver, with a remote party by means of the vehicle navigation system according to claim 1 that comprises
an input means configured to receive and to digitize a speech signal;
a speech recognition means configured to receive and to recognize the digitized speech signal;
a text message generating means configured to generate a text message based on the recognition of the digitized speech signal; and
a transmitting means configured to transmit the text message to a remote receiving means.

The speech signal is obtained by means of one or more microphones installed in the passenger compartment of a vehicle to detect verbal utterances of the passengers. Advantageously, different microphones are installed in the vehicle and located in the vicinities of the respective passenger seats. Microphone arrays may be employed including one or more directional microphones in order to increase the quality of the microphone signal (comprising the speech signal but also background noise) which after digitization is to be processed further by the speech recognition means.

The speech recognition means is configured to perform speech recognition as known in the art. In particular, the speech recognition means can be configured to recognize the digitized speech signal on a letter-by-letter and/or word-by-word and/or sentence-by-sentence basis. Advantageously, all three modes are implemented and the user may choose one of the recognition modes. Whereas in the letter-by-letter mode the user is expected to spell a word letter-by-letter, in the word-by-word mode pauses after each spoken word are required. The letter-by-letter mode is relatively uncomfortable but reliable.

It may also be foreseen that probability estimates or other reliability evaluations of the recognition results are assigned to the recognition results that may, e.g., be generated in form of N-best lists comprising candidate words. If the reliability evaluations for one employed speech recognition mode fall below a predetermined threshold the recognition process may be repeated by a different mode.

The digitized speech signal is analyzed for the recognition process. For this, feature (characteristic) vectors comprising feature parameters may be extracted from the bandlimited signals. The wideband spectral envelope, formants, the pitch and short-time power spectrum, etc., may be determined in order to facilitate the recognition process.

Speech recognition can make use of a concatenation of allophones that constitute a linguistic word. The allophones are typically represented by Hidden Markov Models (HMM) that are characterized by a sequence of states each of which has a well-defined transition probability. In order to recognize a spoken word, the speech recognition system computes the most likely sequence of states through the HMM. This calculation can be performed by means of the Viterbi algorithm, which iteratively determines the most likely path through the associated trellis. The guess for an orthographic representation of a spoken word or sentence that corresponds to sampled acoustic signals can be chosen from a finite vocabulary of words that can be recognized. The vocabulary is stored, for example, in form of data lists.

A text message is generated on the basis of the recognition result. The text generating means may be incorporated in the speech recognition means and does not necessarily represent a separate physical unit. The text message generated by the text message generating means on the basis of the recognition result obtained by the speech recognition means can be encoded as an SMS (Short Message Service) message, an EMS (Enhanced Message Service), an MMS (Multimedia Message Service) message or an E-Mail comprising, e.g., ASCII text or another plain text or a richer format text. Encoding as an MMS message allows for a great variety of appended data files to be sent together with the generated text message.

If speech recognition is performed, e.g., on a word-by-word basis, the text generating means combines the recognized words in the proper order. The complete text message is transmitted to a remote communication party that receives the message by some receiving means.

The remote party is usually a communication party located outside the car. The above-mentioned receiving means might be a radio receiver. In particular circumstances, however, the text message may be transmitted from the driver or a front passenger to a back passenger and displayed on a display means (used as the remote receiving means) installed in the back of the vehicle. This may be advantageous in transportation vehicles like buses or in the case of a passenger suffering from reduced hearing capabilities.

The above described inventive navigation system allows for a simplified input of messages to be sent as text messages to a remote party. The input message is a voice message that is to be translated into a text message by the navigation system. This text message is subsequently transmitted to a remote party. Operation of the navigation system for the transmission of a text message does not require any text input by the user. In particular, the driver of a vehicle is, thus, enabled to send a text message to a remote party without typing in any characters. Safety and comfort are, therefore, improved as compared to systems of the art that require haptic inputs by touch screens, keyboards, etc. Provision of an embedded integrated navigation and communication system is also advantageous in terms of the overall expenses and should increase customer's interest in and acceptance of new navigation systems.

According to an embodiment of the invention, the vehicle navigation system further comprises an output means that is configured to output at least part of the text message on a display installed in the vehicle. Alternatively or additionally, the navigation system may comprise a speech output means configured to generate and output a synthesized speech signal based on the text message, e.g., a synthesized voice representation of the entire text message or of a predetermined number of the first words of the text message. By this provision, the recognition result is output to the user who is, thereby, enabled to learn about the recognition result.

The user may, then, acknowledge/confirm the recognition result or may demand for correction by uttering a keyword, e.g., "Correction" or pushing a particular button, for example. Thus, the vehicle navigation system according to one example is provided with a validation means configured to prompt a user of the vehicle navigation system to acknowledge/confirm the output text message and/or the output synthesized speech signal. Provision of such a validation means significantly improves the reliability of the system and, thereby, the customer's acceptance.

The input means of the vehicle navigation system may comprise a speech input. A speech input enables the driver of the vehicle to directly input a voice message that shall be translated into a corresponding text message by the help of the speech recognition means via one or more microphones being part of the speech input.

Alternatively, or in addition, the navigation system may be provided with a telephone unit functioning as the input means. The telephone unit may, in particular, be part of a hands-free set. Thus, the driver may be enabled to utter a message in the microphone of a hands-free set and the detected utterance is transmitted to the telephone unit and input in the speech recognition means via the telephone unit. The input means may also comprise a connector to a cell phone.

Alternatively, or in addition, the navigation system may be provided with a Bluetooth connector and/or a WLAN connector to improve the variability and functionality of the input means. In this case, even an audio file stored on a mobile audio device, e.g., an MP3 player, may be input via the input means in the speech recognition system for speech recognition and subsequent generation of a text message that is to be transmitted to a remote communication party. Moreover, the driver may carry a headset connected to the navigation system by the Bluetooth technology. Since in this case, the microphone used for the voice message that is to be translated into a text message is very close to the user's mouth, the quality of the speech signal to be recognized by the speech recognition means of the navigation system is relatively high and, thus, it is to be expected that the recognition result is highly reliable.

According to further examples of the herein disclosed vehicle navigation system the transmitting means may be configured to broadcast the text message by radio, in particular, by Wireless Local Area Network, WLAN. A WLAN connection might be advantageous, if the density of respective stationary WLAN spots is sufficiently high. The transmitting means may, in particular, be configured to broadcast the text message directly to an Internet address (again, e.g., using the WLAN technology). An Internet server may operate as the above-mentioned remote receiving means. Thus, e.g., E-Mails can be sent directly by WLAN to an Internet server.

Furthermore, the vehicle navigation system may comprise a storage means configured to store at least one audio file (e.g., an MP§ or an WMA file) and/or at least one image file (e.g., a JPEG file) and/or at least one video file (e.g., an AVI file) and the message generating means may be configured to combine the text message and at least one of the at least one audio file and at least one image file and at least one video file to generate a combined message and wherein the transmitting means can be configured to transmit the combined message.

An audio file, e.g., an MP3 file, stored in the storage means can, thus, be appended to the text message, for example, and the text message is transmitted as an MMS message. The driver may instruct the message generating means to append a particular MP3, e.g., by utterance of the text of an ID3 (identify an MP3) tag that is tagged to the MP3 file. The storage means can be an exterior data volume, e.g., a CD or a DVD, or may be a hard disk installed in the vehicle navigation system.

The vehicle navigation system may also comprise a receiving means configured to receive a text message transmitted from a remote communication party, in particular, an E-Mail, an SMS message or an MMS message and an output means configured to output the text message. The output means may be the same as the above-mentioned optical or acoustical output means. If the text message received from a remote sender shall be output by a synthetic speech output, the text messages has to be translated into synthetic speech signals with the help of the speech recognition means.

An incoming E-Mail, e.g., can be output to the passengers of the vehicle without any manual operation. An announcement message may be output by the output means as, e.g., a synthesized speech output "E-Mail received" and, if no intervention by any of the passengers is detected, the received E-Mail will be displayed on a display or output in form of synthesized speech. Two-way text message communication is, thus, facilitated according to an embodiment of the present invention.

The present invention also provides a method for transmitting a text message by means of a vehicle navigation system, comprising
receiving a digital speech signal by an input unit of a navigation system;
processing the digital speech signal by a speech recognition means of the navigation system to obtain a recognition result for the digital speech signal;
generating a text message based on the recognition result; and
transmitting the text message by the navigation system.

The digital speech signal is obtained by means of one or more microphones detecting an utterance of a passenger of a vehicle in which the vehicle navigation system is installed.

The recognition result comprises, e.g., one or more recognized words stored in a database and assigned to the speech signal.

The processing of the digital speech signal can be performed on a letter-by-letter and/or word-by-word and/or sentence-by-sentence basis. For example, the user may choose for convenience speech recognition on a sentence-by-sentence basis or on a word-by-word basis. If, however, the recognition result is not satisfying, the speech recognition process may be repeated on a letter-by-letter basis.

The processing of the digital speech signal may particularly be performed on one of the letter-by-letter basis, the word-by-word basis and the sentence-by-sentence basis and the recognition result may be evaluated by some score. If the score falls below a predetermined threshold, the processing of the digital speech signal in order to obtain a recognition result is repeated on a different one of the letter-by-letter basis, the word-by-word basis and the sentence-by-sentence basis than before. Again, the result may be evaluated and processing may be repeated in the third mode (say, on a letter-by-letter basis when the first two processing operations have been performed on a sentence-by-sentence and word-by-word basis, respectively).

If processing of the speech signal is performed on a word-by-word basis, each recognized word can be assigned a candidate word score. Processing can also be performed automatically in all three modes and in this case the recognition result with the highest score (obtained by one of the processing on the sentence-by-sentence, word-by-word basis and letter-by-letter basis) may be output acoustically or optically for confirmation by the user.

According to a further example, the herein disclosed method comprises the steps of displaying at least part of the text message on a display means and/or a outputting a synthesized speech signal based on the text message and prompting a user of the vehicle navigation system to acknowledge the text message displayed on the display means and/or the output synthesized speech signal and the transmitting of the text message by the navigation system is performed in response to a predetermined user's input in response to the displayed text message and/or the output synthesized speech signal.

The transmission may be performed only in response to an input by the user or after a predetermined time interval during which the user does not react at all. The user may also instruct the system to repeat the recognition process, e.g., based on a different recognition mode than previously used (e.g. on a word-by-word basis rather than a sentence-by-sentence basis).

In the inventive method the text message may be broadcasted by radio, in particular, by Wireless Local Area Network, WLAN and it may be combined with an audio file and/or an image file and/or a video file to obtain a combined message that is transmitted to a remote communication party.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 illustrates basic components of an example of the herein disclosed navigation system including a speech input means, a speech recognition means and a message generating means as well as a transmitting means.

Figure 2 shows a flow diagram illustrating an example of the method of transmitting a text message according to the invention.

Figure 3 shows a flow diagram illustrating another example of the method of transmitting a text message according to the invention.

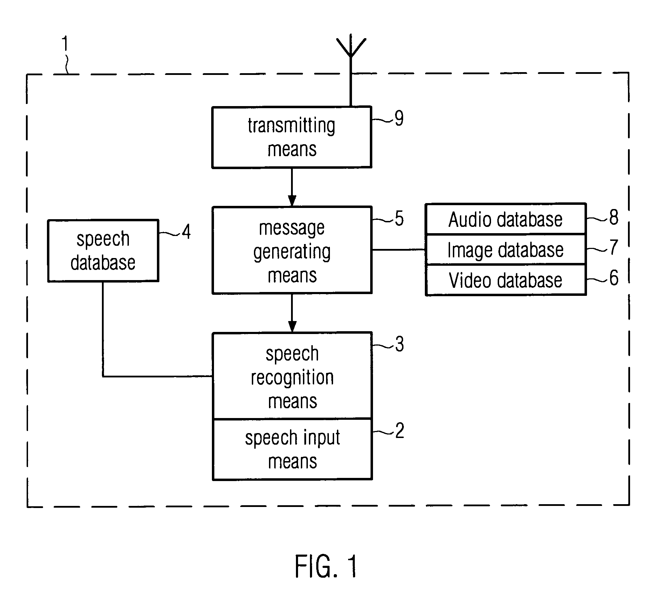

As shown in Figure 1 an example of a vehicle navigation system 1 according to present invention comprises a speech input means 2 and a speech recognition means 3. The speech input means 2 is used to receive a speech signal detected by one or more microphones and to generate a digitized speech signal based on the detected speech signal. The speech recognition means 3 is configured to analyze the digitized speech signal for recognition. For the analyzing process feature vectors comprising characteristic parameters as cepstral coefficients are deduced from the digitized speech signal.

The speech recognition means 3 has access to a speech database 4 in which speech samples are stored. Comparison of the analyzed speech signal with speech samples stored in the speech database 4 is performed by the speech recognition means 3. The best fitting speech sample is determined and the corresponding text message is generated or read from the speech database 4.

For example, a user of the navigation system 1, e.g., a driver of the vehicle in which the vehicle navigation system 1 is installed, may intend to send an SMS message to another person. He activates the speech input means, e.g., by means of a push-to-talk lever. He may utter the keyword "SMS" followed by "Dear XY, I will be late for about 20 minutes". The utterance is detected by one or more microphones and digitized and analyzed for speech recognition. The speech recognition means 3 may work on a word-by-word basis and by comparison of each analyzed word with speech samples stored in the speech database the driver's utterance can correctly be recognized. Accordingly, a text message is generated by a message generating means 5 from character strings that are identified by the speech recognition means 3 to correspond to each word of the driver's utterance, respectively.

Assume that the driver also wants to insert an image in the message to be sent to XY. In this case, he would preferably use the keyword "EMS" or "MMS" instead of "SMS". After his utterance has been recognized by the speech recognition means 3 the navigation system 1 may output a synthesized verbal utterance, e.g., "Text of SMS (EMS, MMS): Dear XY, I will be late for about 20 minutes". Thus, the driver can verify the recognized text, e.g., by utterance of the keyword "Correct". Subsequently, he may instruct the navigation system 1 to insert an image in the message to be sent.

Preferably, in the present example the navigation system 1 is designed to "expect" an instruction for inserting an audio, image or video file after the keyword "Correct" in the case that the driver has asked for an EMS (Enhanced Message Service) or MMS (Multimedia Message Service) by the corresponding keyword. The driver may instruct "Insert image "zz"". By "zz" a file to be inserted can be identified by means of the speech recognition means 3.

The message generating means 5 comprised in the vehicle navigation system 1 generates the complete message to be sent by generating the text string "Dear XY, I will be late for about 20 minutes" and appending the image identified by "zz" to the message. The image file is loaded from a media database including a video database 6, an image database 7 and an audio database 8. The video database 6 may store, e.g., MPEG files and/or AVI (Audio Video Interleaved) files, the image database 7 may store, e.g., JPEG files and/or vector graphics and/or bitmaps and the audio database 8 may store, e.g., MP3 files and/or WAV files and/or WMA files.

The complete message including the image file is passed by the message generating means 5 to a transmitting means 9 for transmission to a remote communication party, i.e. in the present case, to a person named XY. The transmitting means 9 transmits the message wirelessly.

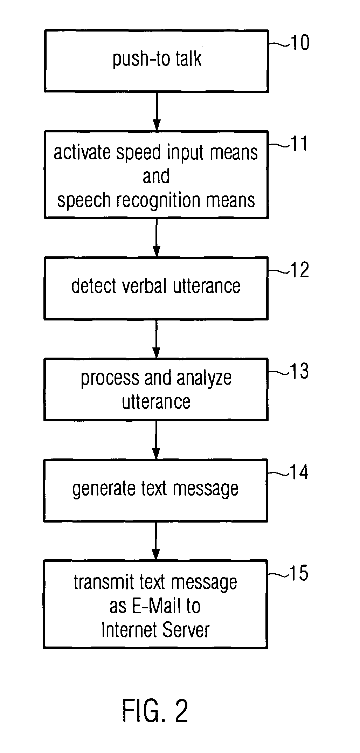

As show in Figure 2 according to an example of the herein disclosed method for transmitting a text message, a driver of a vehicle operates a push-to-talk lever 10 in order to activate 11 a speech input means and a speech recognition means of a navigation system installed in the vehicle. A microphone installed in the vehicle is also switched on by the operation of the push-to-talk lever. Alternatively, a microphone array including one or more directional microphones may be used for detecting the driver's utterance 12.
It may be preferred that activation of the speech recognition means is performed by the utterance of a keyword. In this case, the system has to be in a stand-by mode, i.e. the microphone and the speech input means are active. The speech input means in this case may recognize the main keyword for activating the speech recognition means by itself without the help of an actual recognizing process and a speech database, since the main keyword should be chosen to be very distinct and the digital data representation thereof can, e.g, be permanently hold in the main memory.

The driver may send an E-Mail to a remote communication party. He may instruct the navigation system to generate an E-Mail by utterance of a corresponding keyword, e.g., "E-Mail" or by manual operation, e.g., pushing a particular button.

The microphone detects a speech utterance of the driver. Since he wants to generate and transmit an E-Mail, according to the present example, the driver gives the instruction "E-Mail". In response, a synthetic speech output "Text for the E-Mail" is heard. The synthetic speech signal is output by one or more loudspeakers installed in the passenger compartment of the automobile. The driver subsequently dictates the text for the E-Mail. He ends the text by the keyphrase "End of E-Mail". In response to the keyphrase the driver is asked about the addressee.

The detected verbal utterance is processed and analyzed to obtain digitized and analyzed signals useful for the recognition process 13. A text message corresponding to the detected verbal utterance is generated 14. This can be performed by means of a lookup table including character string representations of a digitized speech signal.

The spoken text is processed by the speech input means. In particular, the microphone signal obtained by the microphone is digitized to obtain a digital speech signal. The digital speech signal is analyzed by the speech recognition means in order to recognize the digital speech signal. Many variants of the recognition process are well-known in the art and may advantageously by applied in the present invention. Analyzing may comprise determination of the spectral envelope and short-time power of the speech signal etc.

After the text message has been generated 14 the text message is transmitted to a remote party 15. In the present example, an E-Mail with the text dictated by the driver of the vehicle is transmitted to an Internet Server 15 passing the E-Mail to the addressee. The E-Mail address of the recipient of the E-Mail is also stored in a database of the vehicle navigation system.

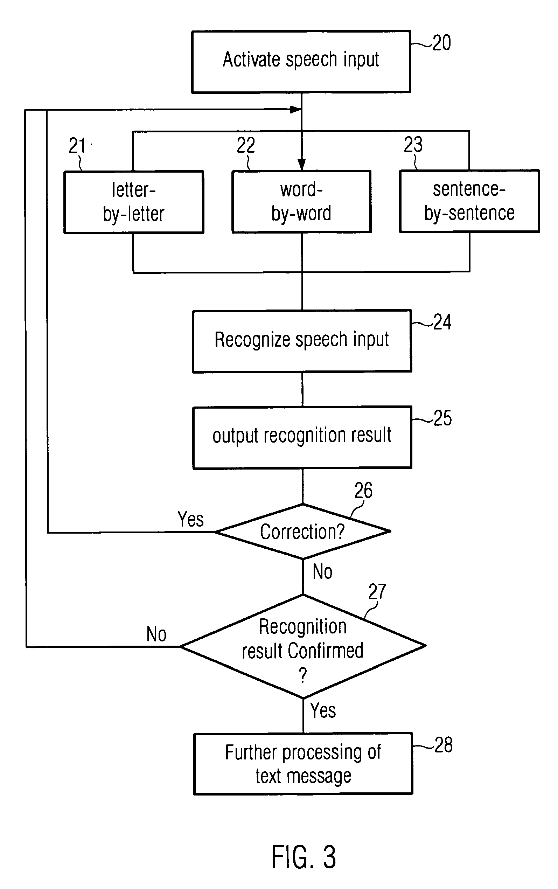

Figure 3 shows another example of the inventive method. Speech input for a spoken message is started 20 by a user of a navigation system installed in a vehicle, e.g., by a pushing a speech input button. Speech recognition may be implemented on a letter-by-letter basis 21, word-by-word-basis 22 or sentence-by-sentence basis 23. It may also be possible to implement all three modes of speech recognition and to provide the user with the possibility to choose one of these modes in accordance with the actual circumstances. In a noisy environment, e.g., when driving at high speed, speech recognition on a letter-by-letter basis 21 may be chosen by the driver, since this mode may be more robust than the other ones.

After input of the speech signal, i.e. detection of the user's utterance by one or more microphones, the recognition process is carried out 24 by means of comparison of the digitized and analyzed speech signal with stored speech samples. The recognition result is output 25 as a text on a display and/or a synthesized speech output. The user is prompted 26 to verify the speech recognition result that is optically or acoustically output.

The user may confirm the recognition result by uttering a keyword, e.g., "Correct", or by pushing a button, etc. If he asks for correction, e.g., by the keyword "False", the reconnection process can be repeated, e.g., by means of another recognizing mode than used before (e.g., by means of the letter-by-lefter mode). Alternatively, word candidates of N-best lists that are different from the ones that are previously output may be output after rejection of the first recognition result by the user. Alternatively, the user may be prompted to repeat the voice message that is to be translated into the text.

If the recognition result is confirmed by the user, the navigation system may ask whether or not the message is completed 27. Again, confirmation of the end of the message can be prompted by a display means or by a synthetic speech output.

If the user confirms the end of the message 27, the text message can be processed 28 further. For example, it can be stored for a later transmission or it can be supplemented by some media file on demand by the user. In particular, the confirmed text message is transmitted 28 to a remote communication party.

## Claims

1. Vehicle navigation system, comprising
an input means configured to receive and to digitize a speech signal;
a speech recognition means configured to receive and to recognize the digitized speech signal;
a text message generating means configured to generate a text message based on the recognition of the digitized speech signal; and
a transmitting means configured to transmit the text message to a remote receiving means.

2. The vehicle navigation system according to claim 1, wherein the speech recognition means is configured to recognize the digitized speech signal on a letter-by-letter and/or word-by-word and/or sentence-by-sentence basis.

3. The vehicle navigation system according to claim 1 or 2, further comprising an output means configured to output at least part of the text message on a display installed in the vehicle.

4. The vehicle navigation system according to one of the preceding claims, further comprising a speech output means configured to generate and output a synthesized speech signal based on the text message.

5. The vehicle navigation system according to claim 3 or 4, further comprising a validation means configured to prompt a user of the vehicle navigation system to acknowledge the output text message and/or the output synthesized speech signal.

6. The vehicle navigation system according to one of the preceding claims, wherein the input means comprises a speech input and/or a telephone unit and/or a connector to a cell phone and/or a Bluetooth connector and/or a WLAN connector.

7. The vehicle navigation system according to one of the preceding claims, wherein the transmitting means is configured to transmit the text message by radio, in particular, by Wireless Local Area Network, WLAN.

8. The vehicle navigation system according to one of the preceding claims, wherein the speech recognition means is configured to generate the text message as an SMS message, an EMS message, an MMS message or an E-Mail.

9. The vehicle navigation system according to one of the preceding claims, further comprising
a storage means configured to store at least one audio file and/or at least one image file and/or at least one video file; and wherein
the message generating means is configured to combine the text message and at least one of the at least one audio file and at least one image file and at least one video file to generate a combined message; and wherein
the transmitting means is configured to transmit the combined message.

10. The vehicle navigation system according to one of the preceding claims, further comprising
a receiving means configured to receive a text message transmitted from a remote communication party, in particular, an E-Mail, an SMS message or an MMS message, and
an output means configured to output the text message.

11. Method for transmitting a text message by means of a vehicle navigation system, comprising
receiving a digital speech signal by an input unit of a navigation system;
processing the digital speech signal by a speech recognition means of the navigation system to obtain a recognition result for the digital speech signal;
generating a text message based on the recognition result;
transmitting the text message by the navigation system.

12. Method according to claim 11, wherein the processing of the digital speech signal is performed on a letter-by-letter basis and/or word-by-word basis and/or sentence-by-sentence basis.

13. Method according to claim 12, wherein
the processing of the digital speech signal is performed on one of the letter-by-letter basis, the word-by-word basis and the sentence-by-sentence basis; and further comprising
evaluating the recognition result by a score; and
if the score falls below a predetermined threshold, repeating the processing of the digital speech signal on another one of the letter-by-letter basis, the word-by-word basis and the sentence-by-sentence basis.

14. Method according to one of the claims 11 - 13, further comprising
displaying at least part of the text message on a display means and/or outputting a synthesized speech signal based on the text message and prompting a user of the vehicle navigation system to acknowledge the text message displayed on the display means and/or the output synthesized speech signal; and wherein
transmitting of the text message by the navigation system is performed in response to a predetermined user's input in response to the displayed text message and/or the output synthesized speech signal.

15. Method according to one of the claims 11 - 14, wherein the text message is wirelessly transmitted, in particular, by Wireless Local Area Network, WLAN.

16. Method according to one of the claims 11 - 15, further comprising combining the text message with an audio file and/or an image file and/or a video file to obtain a combined message and transmitting the combined message.
